# EUROPEAN PATENT APPLICATION

(11) **EP 4 019 957 A1**
(43) Date of publication of application: **29.06.2022**
(21) Application number: 20813227.4
(22) Date of filing: 21.05.2020
(51) Int. Cl.: G01N 27/62, G01N 30/72, G01N 30/86, G01N 30/88

(54) **MASS SPECTROMETRY METHOD USING CHROMATOGRAPHY-MASS SPECTROMETRY DEVICE**

(30) Priority: 31.05.2019 JP 2019102988
(71) Applicant: Shin Nippon Biomedical Laboratories, Ltd., Kagoshima 891-1394 (JP)
(72) Inventor: SENDA, Naoto, Kagoshima-shi, Kagoshima 891-1394 (JP); TSUKAZAKI, Yasuko, Kagoshima-shi, Kagoshima 891-1394 (JP)
(74) Representative: van Dam, Vincent
(86) International application number: PCT/JP2020/020150
(87) International publication number: WO 2020/241454

(57) **Abstract**

[Problem] To provide a mass spectrometry method that uses a chromatography-mass spectrometry device, wherein mass spectrometry can be performed with a convenient method at low cost. [Solution] A mass spectrometry method for a target object, using a chromatography-mass spectrometry device that includes, in order, a chromatograph, an ionization unit, a first mass separation unit, a collision cell, a second mass separation unit, and an ion detection unit, wherein an ion pair agent and Htinig's base are added to a mobile phase of the chromatograph, and the absolute value of an applied voltage of the collision cell is 20V to 250V.

## Description

### TECHNICAL FIELD

The present invention relates to a mass spectrometry method using a chromatographic mass spectrometry device. In particular, the present invention relates to a mass spectrometry method capable of appropriately measuring proteins, peptides, or nucleic acids.

### BACKGROUND ART

WO 2016/125271 describes a chromatography-mass spectrometry device. This device is complicated and has a problem that it is not suitable for mass spectrometry of proteins, peptides or nucleic acids.

### [Citation List]

### [Patent Documents]

Patent Document 1: WO 2016/125271

### SUMMARY OF INVENTION

### Problems to be solved by Invention

One of the inventions described herein is to provide a mass spectrometry method using a chromatography-mass spectrometry device capable of performing mass spectrometry by using a low-cost and simple method. In particular, an obj ect of the invention is to provide a mass spectrometry method using a chromatography-mass spectrometry device capable of realizing quantitative analysis of proteins, peptides, or nucleic acids.

### Means for Solving the Problems

One of the inventions described herein is based on a finding that mass spectrometry can be performed with a low-cost and simple method by adding an ion pair agent and a Hunig' s base to a mobile phase of the chromatograph and further applying high collision energy to a collision cell.

One of the inventions described herein relates to a mass spectrometry method for a target object using a chromatography-mass spectrometry device.

The chromatography-mass spectrometry device 1 used in this method has, for example, a chromatograph 3, an ionization unit 5, a first mass separation unit 7, a collision cell 9, a second mass separation unit 11, and an ion detection unit 13 in this order. It is preferable that the first mass separation unit and the second mass separation unit include a first quadrupole mass spectrometer and a second quadrupole mass spectrometer, respectively.

In addition, this method includes a process of adding an ion pair agent and a Hunig's base to a mobile phase of the chromatograph.

Furthermore, this method includes a process of setting the absolute value of the applied voltage of the collision cell to 20 V or higher and 250 V or lower (preferably, 60 V or higher and 120 V or lower) . The applied voltage of the collision cell may be adjusted such that an ion intensity passing through the collision cell and having a mass-to-charge ratio (m/z) of 94.9 becomes a maximum value or 90% or higher of the maximum value.

An example of the ion pair agent is hexafluoro-2-propanol (HFIPA) .

It is preferable that a cap with a vent valve is used in the chromatograph.

Examples of the target object include proteins, peptides, or nucleic acids.

### Advantageous Effects

According to one of the inventions described herein, it is possible to perform mass spectrometry with a low-coast and simple method by adding an ion pair agent and a Hunig's base to a mobile phase of the chromatograph and applying high collision energy to the collision cell.

### BRIEF DESCRIPTION OF DRAWINGS

FIG. 1 is a block diagram illustrating a configuration example of a chromatography-mass spectrometry device.
FIG. 2 is a diagram illustrating schematics of a device used in an example.
FIG. 3 is a diagram illustrating schematics of a device used in an example.
FIG. 4 is a graph corresponding to a diagram illustrating an examination result for product ions.
FIG. 5 is a graph corresponding to a diagram illustrating an examination result for effects of the Hunig's base.
FIG. 6 is a graph corresponding to a diagram illustrating an SRM chromatogram.
FIG. 7 illustrates a scheme of a pretreatment method in an example.
FIG. 8 illustrates a scheme of a pretreatment method using a PCI reagent.
FIG. 9 illustrates a scheme of a pretreatment method using a kit (CLARUTY OTX).
FIG. 10 is a graph corresponding to a diagram for comparing a pressure (back pressure) of a HPLC column and a sensitivity of S-modified oligonucleic acids with or without a safety bottle cap.

### MODES FOR EMBODYING INVENTION

Embodiments for carrying out the present invention will now be described with reference to the accompanying drawings. The present invention is not limited to the forms described below, but also includes those appropriately modified from the forms described below to the extent obvious to those skilled in the art.

One of the inventions described herein relates to a mass spectrometry method for a target object using a chromatography-mass spectrometry device. The chromatography-mass spectrometry device is a mass spectrometry device having a mass spectrometry unit connected to a chromatograph, and the mass spectrometry unit has mass separation units in front of and behind a collision cell. The mass spectrometry unit has an ionization unit that ionizes a liquid eluted from the chromatograph to obtain precursor ions, a pre-stage mass separation unit that selects the precursor ions, a collision cell that cleaves the precursor ions to produce product ions, and a post-stage mass separation unit that selects the product ions (target object). The mass spectrometry method for a target object is to perform mass spectrometry for an object sample to check whether or not a target object having a known mass (or mass-to-charge ratio) exists, obtain a relative abundance ratio of the target object, or perform quantitative analysis for the target object.

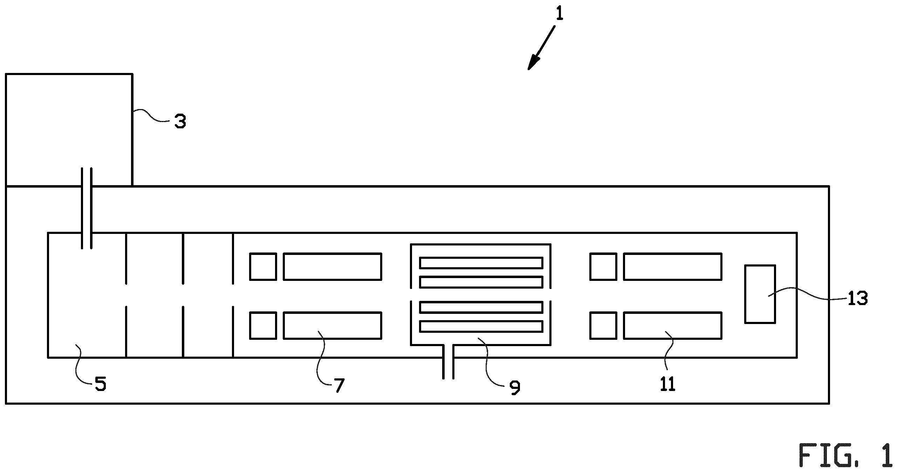

FIG. 1 is a block diagram illustrating a configuration example of a chromatography-mass spectrometry device. As illustrated in FIG. 1, the chromatography-mass spectrometry device 1 includes a chromatograph 3, an ionization unit 5, a first mass separation unit 7, a collision cell 9, a second mass separation unit 11, and an ion detection unit 13 in this order.

### Chromatograph

The chromatograph 3 is a liquid chromatograph typically having a mobile phase. A high performance liquid chromatograph (HPLC) device may be used for the chromatograph 3. The chromatograph is well known in the art, and any chromatograph known in the art may be employed appropriately. The liquid chromatograph has, for example, a mobile phase container in which a mobile phase is stored, a pump that sucks the mobile phase and feeds it at a predetermined flow rate, an injector that injects a predetermined amount of an object sample into the mobile phase, and a column that separates various compounds contained in the sample liquid in the time direction.

As the mobile phase, various solvents may be used as long as they do not adversely affect the column or device. Examples of the solvents include an aqueous solution of water or salts, alcohols, acetonitrile, dichloromethane, and trifluoroacetic acid.

According to any one of the inventions described herein, an ion pair agent and a Hunig's base are added to the mobile phase of the chromatograph. The amount of the ion pair agent added to the mobile phase may be, for example, 0.001 mol/L or more and 1 mol/L or less, 0.005 mol/L or more and 0.5 mol/L or less, 0.01 mol/L or more and 0.1 mol/L or less, 0.001 mol/L or more and 0.1 mol/L or less, or 0.1 mol/L or more and 1 mol/L or less. The concentration of the ion pair agent when added to the mobile phase may be 0.01 wt% or higher and 25 wt% or lower. The amount of the Hunig' s base added to the mobile phase may be, for example, 0.01 mol/L or more and 0.25 mol/L or less, 0.005 mol/L or more and 0.15 mol/L or less, 0.01 mol/L or more and 0.1 mol/L or less, 0.001 mol/L or more and 0.1 mol/L or less, or 0.1 mol/L or more and 0.25 mol/L or less. The concentration of the Hunig' s base when added to the mobile phase may be 0.1 wt% or higher and 25 wt% or lower.

The ion pair agent may include any material as long as it is soluble. Examples of the ion pair agent include hexafluoro-2-propanol (HFIPA), trifluoroacetic acid, pentafluoropropionic acid, heptafluoro-n-butyric acid, heptafluoroisobutyric acid, nonafluorovaleric acid, nonafluoroisovaleric acid, undecafluoro hexanoic acid, tridecafluoroheptanoic acid, and perfluoro low-fatty acid (pentadecafluorooctanoic acid). An example of the concentration of the ionizing agent may be 1 mmol/L or more and 100 mmol/L or less, or 5 mmol/L or more and 20 mmol/L or less.

The Hunig's base means N, N-diisopropylethylamine (DIPEA).

When the ion pair agent (for example, hexafluoro-2-propanol: HFIPA) is added to the mobile phase, it is preferable to use a fluorine-based column (using fluororesin) as the mobile phase column (mobile phase bottle) . This is because when a normal glass column is used, especially when HFIPA is added to the mobile phase, HFIPA may react with glass. Examples of the fluorine-based columns include PTFE (polytetrafluoroethylene), PFA (tetrafluoroethylene/perfluoroalkyl vinyl ether copolymer), FEP (tetrafluoroethylene/hexafluoropropylene copolymer), ETFE (tetrafluoroethylene/ethylene copolymer), PVDF (polyvinylidene fluoride), PCTFE (polychlorotrifluoroethylene), and ECTFE (chlorotrifluoroethylene/ethylene copolymer). Especially, PTFE and PFA are preferable.

Examples of the target object include proteins, peptides, or nucleic acids. In addition, the sample to be injected into the chromatography device is preferably a liquid containing proteins, peptides, or nucleic acids. Examples of such a sample include blood, plasma, serum, culture supernatants, tissues, body fluids, and samples for genetic analysis.

It is preferable to use a chromatograph having a cap with a vent valve. The chromatography device with a vent valve is described in Japanese Patent Application Laid-Open No. 2017-215215 or Japanese Patent Application Laid-Open No. 2006-509214. By using the vent valve, it is possible to effectively prevent evaporation of the mobile phase. When an ion pair agent (for example, hexafluoro-2-propanol: HFIPA) is added to the mobile phase, specific problems may occur. For example, the ion bear agent evaporates, the sensitivity decreases, or the analysis column of the high performance liquid chromatograph device is damaged. For these problems, it is possible to effectively prevent evaporation of the mobile phase by using the vent valve.

### Mass spectrometry unit

The mass spectrometry unit, also called "mass spectrometer", is a device for analyzing the mass (or mass-to-charge ratio: m/z) of the target object. Typically, the mass spectrometry device has a plurality of chambers adjusted to a degree of vacuum depending on the target sample or target object. In order to achieve a desired degree of vacuum, a suitable pump may be connected to each chamber. Since the mass spectrometer is well known in the art, unless otherwise specified, elements of the well-known mass spectrometer can be appropriately employed in the present specification. While an example of the mass spectrometry unit will be described below, the present invention is not limited to the following description.

### Ionization unit

The ionization unit is an element for ionizing the liquid eluted from the chromatograph to obtain precursor ions. As the ionization unit, any one well known in the chromatography-mass spectrometry device may be appropriately employed. As an example of such an ionization unit, it may have an electrospray ionization probe that sprays a liquid (material solution) from a chromatograph while applying an electric charge. The ionization unit may be set to approximately the atmospheric pressure.

### Analysis room

The analysis room usually becomes a high vacuum or ultra-high vacuum during analysis. In order to adjust the difference in the degree of vacuum between the ionization unit and the analysis unit, a multi-stage differential evacuation system having a first intermediate vacuum room and a second intermediate vacuum room in which the degree of vacuum gradually increases may be provided between the ionization unit and the analysis unit. Each room is evacuated, for example, by a vacuum pump to an appropriate degree of vacuum. The ionization room and the first intermediate vacuum room in the subsequent stage may communicate with each other through a small-diameter heating capillary. The first intermediate vacuum room and the second intermediate vacuum room may be separated by a skimmer, and an ion guide for delivering ions to the subsequent stage while collecting the ions may be installed in each of the first and second intermediate vacuum rooms.

In the analysis room, there are, for example, the first mass separation unit 7, the collision cell 9, the second mass separation unit 11, and the ion detection unit 13 in this order.

### First mass separation unit

The first mass separation unit 7 is an element for separating ions depending on the mass-to-charge ratio (m/z). Examples of the first mass separation unit 7 include a TOF (time-of-flight) mass spectrometer, a multi-pole (quadrupole, hexapole, octapole, dodecapole, hexadecapole) mass filter, and an ion lens. The first mass separation unit 7 is used, for example, to collect ions, separate ions and neutral substances, select ions having a desired mass-to-charge ratio, and guide them to the subsequent collision cell 9. Such structures or voltage application methods are well known in the art. For example, in a quadrupole mass filter, DC and AC voltages are applied in a superimposed manner. In addition, by adjusting the applied voltage, it is possible to allow ions having a desired range of mass-to-charge ratio (m/z) to pass through the quadrupole mass filter.

### Collision cell

The collision cell 9 is also called "reaction cell". When an ion is introduced into the collision cell, it collides with, for example, an ion or inert gas in the cell. In this case, a reaction or dissociation may occur. In the collision cell, various reactions such as collision-induced dissociation, charge transfer reaction, hydrogen atom transfer reaction, proton transfer reaction, and oxidation/halogenation reaction occur depending on the system. The collision cell is well known in the art.

In an example of the collision cell, a multipole (for example, quadrupole) ion guide is provided inside. The collision cell is connected to a supply mechanism for a CID gas such as argon or nitrogen to continuously (or intermittently) supply the CID gas to the inside of the collision cell.

Furthermore, the absolute value of the applied voltage of the collision cell is set to 20 V or higher and 250 V or lower (preferably, 60 V or higher and 120 V or lower). The applied voltage means a voltage applied to the ion guide (electrode) included in the collision cell. Typically, the voltage applied to the ion guide is a high frequency voltage (AC voltage) for collecting ions. However, a DC bias voltage may also be applied to the ion guide. The applied voltage of the collision cell may be adjusted such that the ion intensity of the ions passing through the collision cell (or detected by the ion detection unit) and having a mass-to-charge ratio (m/z) value of 94.9 becomes the maximum value, or 90% or higher of the maximum value. When both the AC and DC voltages are applied to the ion guide, the absolute value of the applied voltage of the collision cell means the absolute value of the AC voltage.

### Second mass separation unit

The second mass separation unit 11 is also similar to the first mass separation unit 11. In general, the second mass spectrometry unit is maintained at a higher degree of vacuum than that of the first mass separation unit 7. An example of the second mass separation unit 11 has a multipole (quadrupole) mass filter that separates ions depending on the mass-to-charge ratio. For example, when a quadrupole mass filter is used, a target ion can pass by adjusting the range of the mass-to-charge ratio that can pass through the mass filter.

### Ion detection unit

The ion detection unit 13 is an element for analyzing ions depending on the mass-to-charge ratio (m/z) to detect a desired target object. For example, when an ion exists, electricity is generated in the detection unit. Therefore, it is possible to detect existence of the target object by measuring the current.

It is preferable that the first and second mass separation units have first and second quadrupole mass spectrometers, respectively.

### Example 1

### Experiment material

The LNA (14-mer oligonucleic acid, molecular weight 4572.6) as a measurement target was taken over from National Cardiovascular Research Center of Japan. 1,1,1,3,3,3-hexafluoro-2-propanol (HFIPA, for high performance liquid chromatography) was purchased from Kanto Chemical Co., Inc., and N, N-diisopropylethylamine (DIPEA, Hunig's base, reagent special grade) and triethylamine (TEA, reagent special grade) were purchased from Fuji Film Wako Pure Chemical Corporation. Other chemicals were selected as a reagent of special grade and purchased from Fuji Film Wako Pure Chemical Corporation. Solid-phase extraction was performed using an OASIS HLB 96 well plate (30 mg, manufactured by Waters Corporation). As the HPLC column, a CADENZA CD-C18 (3 µm) having an inner diameter of 2.1 mm and a length of 50 mm (manufactured by Intakt Corp.) was used. An A-Line safety cap manufactured by Agilent technologies, Inc. was used to prevent evaporation of the mobile phase.

### Measurement device

In the liquid chromatography mass spectrometer, Triple TOF 5600+ was used as a high-resolution mass spectrometry device, and Triple Quad 5500 was used as a quantitative mass spectrometry device (both manufactured by SCIEX Corporation) by connecting Nexla XR HPLC system (manufactured by Shimadzu Corporation) of the liquid chromatography device.

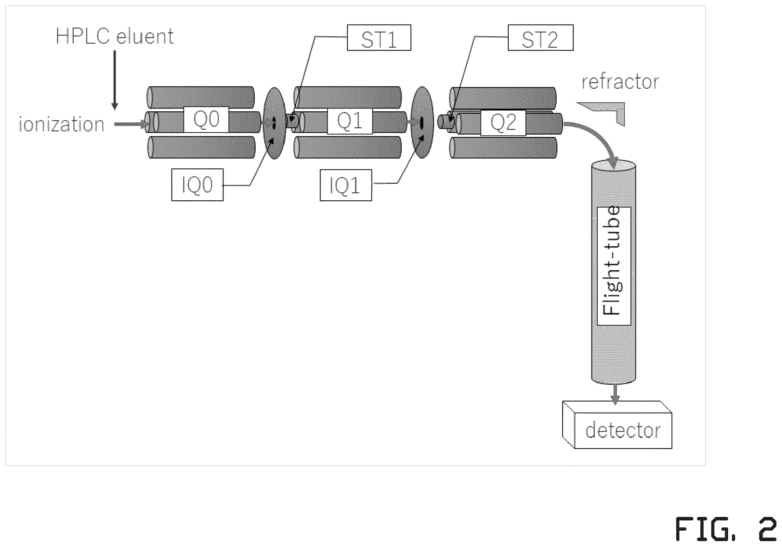

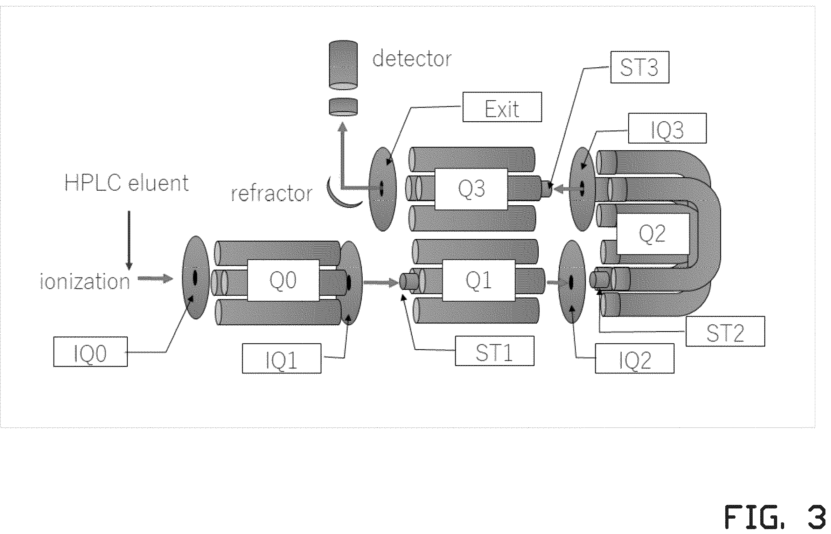

The schematics of the devices used are shown in FIGS. 2 and 3.

### Experiment method

### 1) Preparation of concentration measurement sample

A 0.05% TEA aqueous solution of 10 µL was added to blood plasma of 100 µL, and they were mixed. Then, a 1 mol/L TEA-acetate aqueous solution of 100 µL adjusted to pH 8.4 with acetic acid was added, and they were mixed.

### 2) Preparation of calibration curve sample

LNA was dissolved with a 0.05% TEA aqueous solution to prepare a standard solution for a calibration curve having solution concentrations of 0.1, 0.3, 1.0, 3.0, 10, 30, 100, and 300 ng/mL. When a target object was measured using Triple TOF5600+ (manufactured by SCIEX Corporation), the standard solution for the calibration curve of 0.1 to 100 ng/mL of 10 µL was added to blank plasma of 100 µL, and they were mixed. When the target object was measured using Triple Quad 5500, a calibration curve sample was prepared by adding the standard solution for the calibration curve of 0.3 to 300 ng/mL of 10 µL to blank plasma of 100 µL and mixing them. For both the calibration curve samples, after adding the LNA standard solution, a 1 mol/L TEA-A aqueous solution of 100 µL was added and mixed.

### 3) Preparation of quality control sample (QCS)

Standard solutions for LNA QCS having solution concentrations of 1.0, 3.0, 100, 8000, and 27000 ng/mL were prepared by dissolving LNA with a 0.05% TEA aqueous solution. When a target object is measured using Triple TOF 5600+, QCS standard solutions of 1 µL having concentrations of 1.0, 3.0, 100, and 8000 ng/mL were added to blank plasma of 99 µL, and were mixed. When the target object is measured with Triple Quad 5500, the QCS was prepared by adding and mixing the QCS standard solutions of 1 µL having concentrations of 3.0, 100, 8000, and 27000 ng/mL to blank plasma of 99 µL. For each calibration curve sample, the LNA standard solution was added, and then, a 1 mol/L TEA-A aqueous solution of 100 µL was added and mixed.

### 4) Extraction Operation

The OASIS HLB 96 well plate (30 mg) was activated with acetonitrile of 0.5 mL and was equilibrated with ultrapure water of 0.5 mL. The entire amount of the calibration curve sample or the concentration measurement sample was added to the activated/equilibrated solid phase. After washing the solid phase with ultrapure water of 2 mL, the LNA was eluted from the solid phase with a 50% acetonitrile aqueous solution of 0.3 mL. The eluent was completely dried at 50°C under a nitrogen gas stream, and the residue was dissolved in a 0.05% TEA aqueous solution of 0.1 mL to prepare a measurement sample.

### 5) Measurement method

### 5-1) Liquid chromatography device measurement condition

As the mobile phase of the liquid chromatography device, a 50 mmol/L HFIPA aqueous solution containing DIPEA of 10 mmol/L was used as a mobile phase A, and acetonitrile was used as a mobile phase B. Note that, after setting the mobile phase A in the liquid chromatography device, an A-Line safety cap was used in order to suppress evaporation of HFIPA contained in the mobile phase A. After setting the column thermostat of the liquid chromatography device at 50°C and equilibrating a ratio of the mobile phases A and B of the HPLC column to 95:5 and a flow velocity to 0.4 mL/min, the measurement sample of 10 to 15 µL was injected into the liquid chromatography device. After injection, the ratio of mobile phase B was kept at 5% for 30 seconds, and the ratio of mobile phase B was increased to 30% for 6 minutes after injection. Since the LNA elutes about 3 minutes after injection, the mobile phase was introduced into the mass spectrometry device for only one minute from 2.5 to 3.5 minutes using a divert valve. Then, the ratio of the mobile phase B was increased to 99%, and the HPLC column was washed with acetonitrile for 1 minute. Then, the ratio of the mobile phase B was reduced to 5%, and the HPLC column was equilibrated for 1.5 minutes for the next sample measurement.

### 5-2) Mass spectrometry device measurement condition

For the LNA monitoring ion used for quantitation, a heptavalent m/z 652 was used as a precursor ion. For the product ion, m/z 94.9 (PSO₂⁻) was used. In addition, the collision energy was set such that the intensity of the product ion is maximized. That is, triple TOF5600+ was set to -77 V, and Triple Quad5500 was set to -105 V. For the ion source, temperatures of both Triple TOF5600+ and Triple Quad5500 were set to 700°C, the assist gas pressure and nebulizer gas pressure were set to 70 psi, and the counterflow pressure was set to 30 psi.

### Result

### Reproducibility experiment

Table 1 shows results of the calibration curve and the inter-batch reproducibility using Triple TOF 5600+ (3 cases each).

Table 1. Reproducibility test results with Triple TOF 5600+

### [Table 1]

In the upper half of Table 1, "Calibration" refers to calibration, and "Nominal conc." refers to a nominal concentration. In addition, "observed data" refers to observed data, and "observed conc." refers to an observed concentration. In addition, "Accuracy" refers to accuracy (relative error), and "statistical data" refers to statistical data. In addition, "mean" refers to a mean value, "Accuracy" refers to accuracy (relative error), and "Precision" refers to precision (deviation of data). These notations similarly apply to other tables.

The upper half of Table 1 shows concentrations (observed conc.) obtained by applying the measurement value (the area value of the calibration curve sample) to the resulting linear equation (y = ax+b) for the calibration curve samples of each concentration prepared, pretreated, and measured to create the calibration curve and applying inverse regression. The nominal concentration (nominal conc.) is subtracted from these values, and the value divided by the nominal concentration is expressed as the relative error (RE%). Table 1 shows the results obtained by calculating the relative error (RE%) for each batch and the results obtained from the mean value of three times. In addition, a standard deviation is obtained from the measurement values of three times, and is divided by the mean value, so that a coefficient of variation is expressed as a percentage, which is CV%. This relatively evaluates a relationship between the data and the deviation with respect to the means value.

In the lower half of Table 1, "between-run" refers to an interval between runs.

The lower half of Table 1 shows concentrations obtained from the calibration curve by preparing quality control samples (QC samples). In this table, in order to treat the QC sample as a pseudo sample and make it as close as possible to an actual sample, an addition volume of the solution in which the standard substance added to the biological sample was dissolved was set to 5%. For this table, evaluation was performed in the same way as that of the measurement results of the calibration curve in the upper half of the table.

The criteria for these values are defined by Bioanalytical Method Validation (FDA, 2001), in which RE% is set to ±20% at the lower limit of quantitation (LLOQ), others are set to ±15%, CV% is set to 20% at the lower limit of quantitation, and others are set to 15%.

Table 2 shows the results of a calibration curve and inter-batch reproducibility (3 cases each) using the Triple Quad 5500.

### Table 2. Reproducibility test results with Triple Quad 5500

### [Table 2]

### 2. Rat plasma concentration measurement

The plasma concentrations of 10 mg/kg LNA subcutaneously administered to rats are shown below. While there was a difference in the quantitation limit, no difference in the quantitation value was observed between Triple TOF 5600+ and Triple Quad 5500.

### Table 3. Plasma concentration of 10 mg/kg LNA subcutaneously administered to rats (unit: µg/mL)

### [Table 3]

In the table, "animal No." refers to the animal number of the rat. "Quantitative device" refers to the quantitative analyzer device used in the experiment. "Time after administration (hour)" refers to the time after the administration (hour) . BLOQ refers to "Below the lower limit of quantitation". ND refers to that "not detected".

### Basis data

### 1. Product ion selection

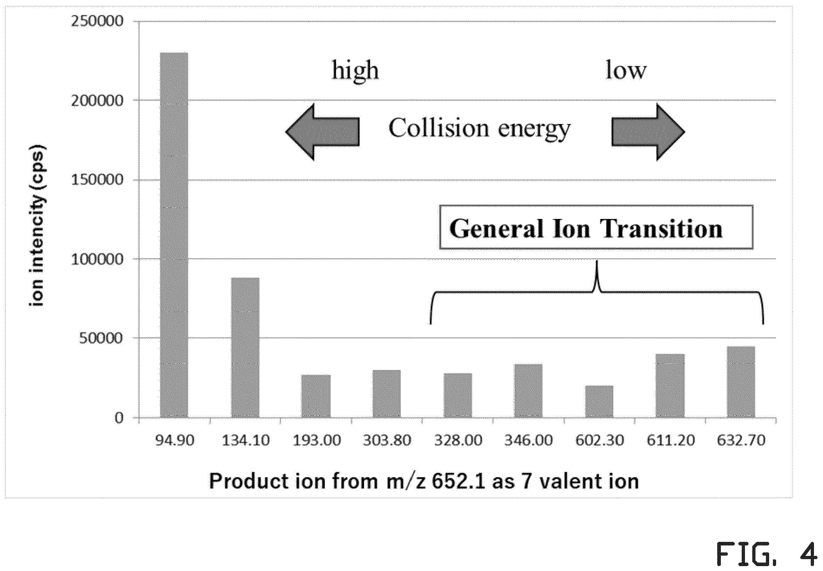

In LC-MS/MS measurement, the product ion that most affects the sensitivity and selectivity was investigated. The result is shown in FIG. 4. The concentration of S-modified oligonucleic acid was adjusted to 3 ng/mL, and measurement was performed under each collision energy condition.

First, a MS/MS spectrum was obtained by using the heptavalent ion of the S-modified oligonucleic acid as a parent ion (precursor). Collision energy where the fragment ion observed in this MS/MS spectrum, m/z 94.90, 134.10, 193.00, 303.80, 328.00, 346.00, 602.30, 611.20, and 632.70 has the maximum sensitivity was searched.

The same HPLC condition was set, the collision energy where each fragment ion is maximized is set for this condition (the measurement conditions are 9 conditions), and the 3 ng/mL S-modified oligonucleic acid was injected into the LC-MS/MS, so that each SRM chromatogram was obtained. From the peak height of the SRM chromatogram obtained in this manner, the graph shown in FIG. 4 was created. In FIG. 4, "ion intensity" refers to ion intensity, "Collision energy" refers to collision energy, "high" refers to high, "low" refers to low, and "production (m/z) from 652.06 (valent 7, m/z)" refers to the mass-to-charge ratio (m/z) of the product derived from the heptavalent ionization at which the mass-to-charge ratio (m/z) is 652.06.

Since the peak height indicates the collision energy at that time and the sensitivity obtained by the selected fragment ion (product), it is possible to obtain the collision energy and ion transition for obtaining the highest sensitivity from FIG. 4.

### 2. Effects of Hunig's base

Investigation was performed for the mobile phase additives with the aim of reducing carryover which is a problem in the nucleic acid measurement. It is difficult to reduce the carryover in the TEA (triethylamine) used in the previous report. For this reason, DIPEA of the Hunig's base having low nucleophilicity was used. As a result, carryover was dramatically reduced, and an increase in sensitivity was also observed as an additional effect. It is conceived that one of the reasons is that carryover, that is, adsorption in the device was suppressed.

### Experiment method

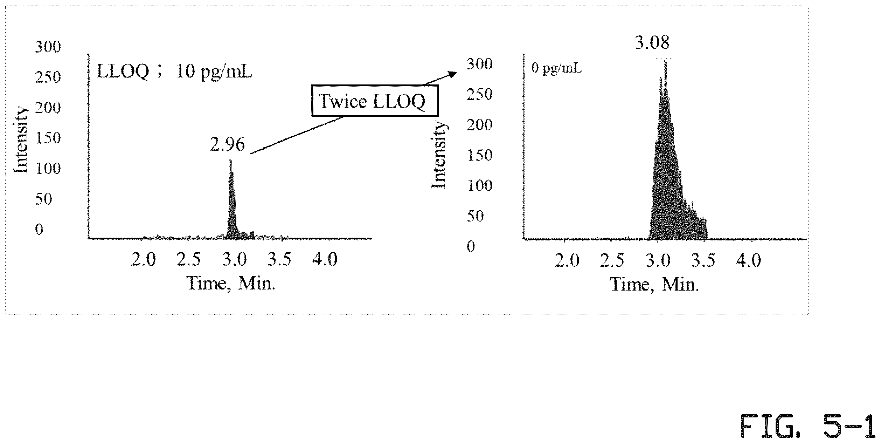

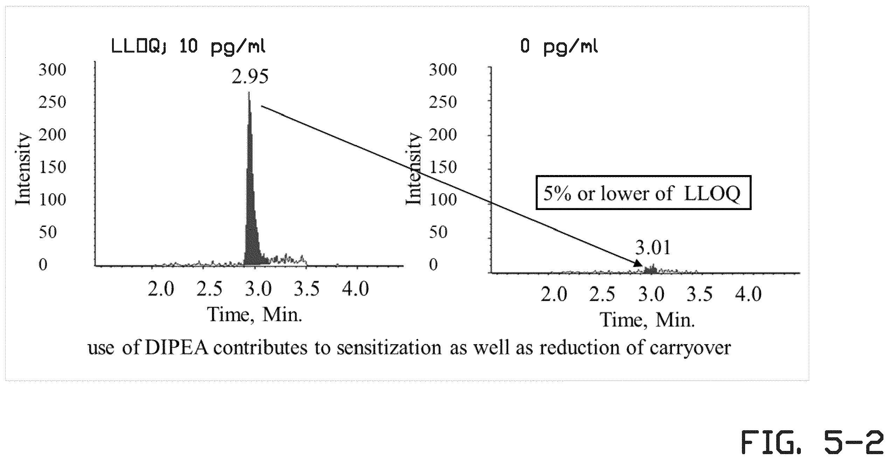

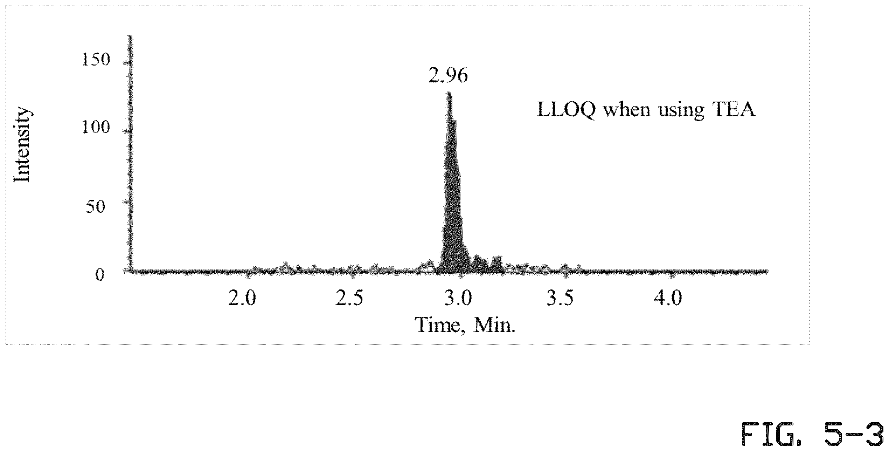

The sample injection was performed in the order of LLOQ (10.0 pg/mL) → ULOQ (10000 pg/mL) → 0 pg/mL, and whether or not there is a peak of 0 pg/mL was checked. The result is shown in FIG. 5.

Two types of HPLC mobile phases were prepared (one with TEA and one with DIPEA), and injection and measurement were performed for each mobile phase in the order of the minimum concentration of the calibration curve (lower limit of quantitation, LLOQ; 10 pg/mL) → (upper limit of quantitation, ULOQ; 10000 pg/mL) → blank (blank; 0 pg/mL).

The measurement result of the TEA-added mobile phase is shown in the upper half of FIG. 5. When injection is performed for the blank after ULOQ measurement, twice the ion intensity of LLOQ is obtained. This indicates that the measurement target remains in the device (LC-MS/MS).

Meanwhile, in the mobile phase obtained by using DIPEA as a defloration agent (second stage in FIG. 5), almost no measurement target was detected in the blank. Therefore, the use of DIPEA as an additive shows that the residue of the measurement target in the device is dramatically improved. This indicates that, when measuring an actual sample, the phenomenon that the measurement value increases due to the residue in the device is prevented, and a more accurate measurement value is provided.

Furthermore, referring to the third stage of FIG. 5, the ion intensity of LLOQ increases about twice that of TEA from 150 cp to about 300 cps in the DIPEA.

From this result, it was recognized that the use of DIPEA as an additive for the mobile phase contributes to sensitization as well as suppressing the residue in the device.

### 3. Review on pretreatment

The inventors thought that, by giving high collision energy, the selection system could be maintained even with a slightly coarse extraction method. As a pretreatment method for a comparison target, the following two methods were used on the basis of the previous report.

### PCI (phenol, chloroform, isoamyl alcohol)

### Extraction method using extraction kit (CLARITY OTX)

Since measurement in the two methods described above was performed with relatively low collision energy, complicated pretreatment (removal of quantitative interfering substances) was necessary, which is considered to affect the recovery rate. In addition, the pretreatment method developed this time is considered to be excellent because a solid phase plate, called OASIS HLB, is employed which is frequently used even for small molecules, and no special reagent is used before loading into the solid phase.

### Comparison of extraction efficiency

The purpose of this experiment is to extract S-modified oligonucleic acid from rat plasma of the same concentration using each pretreatment method (extraction method) and compare the extraction efficiency with respect to the standard solution.

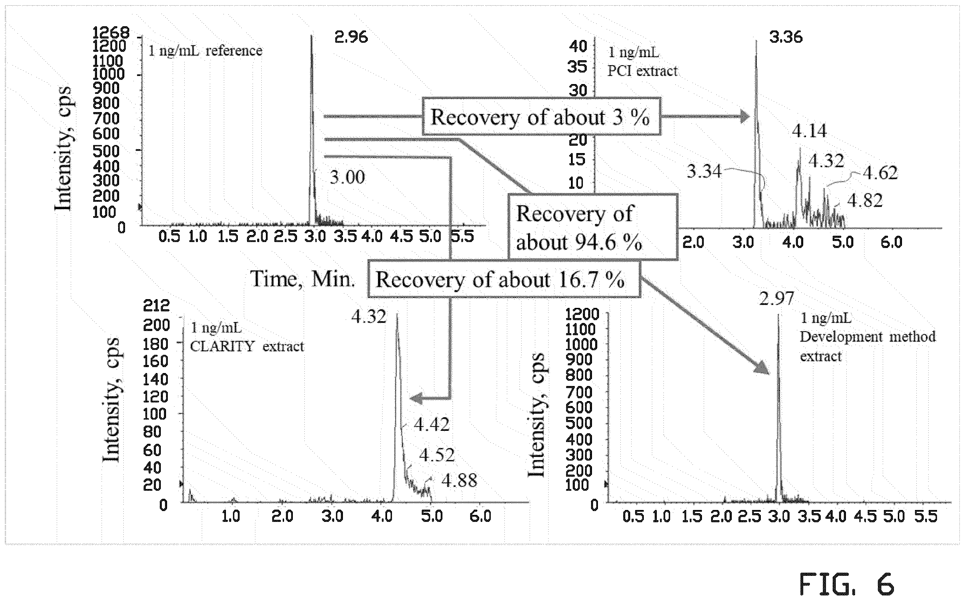

FIG. 6 is an SRM chromatogram showing comparison of recovery rates by comparing the pretreatment methods. The SRM chromatogram of FIG. 6 shows comparison between the ion intensity obtained by measuring a standard solution having a concentration of 1 ng/mL and the peak intensities of S-modified oligonucleic acids extracted by using the PCI-based extraction method, the method using Clarity OTX, and the present method. The recovery rates from each blood plasma were obtained from the height of the peak intensity.

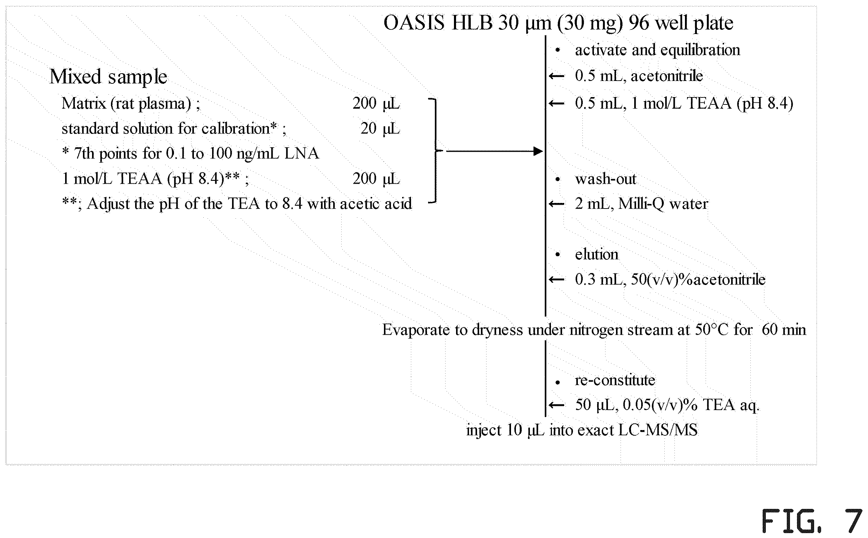

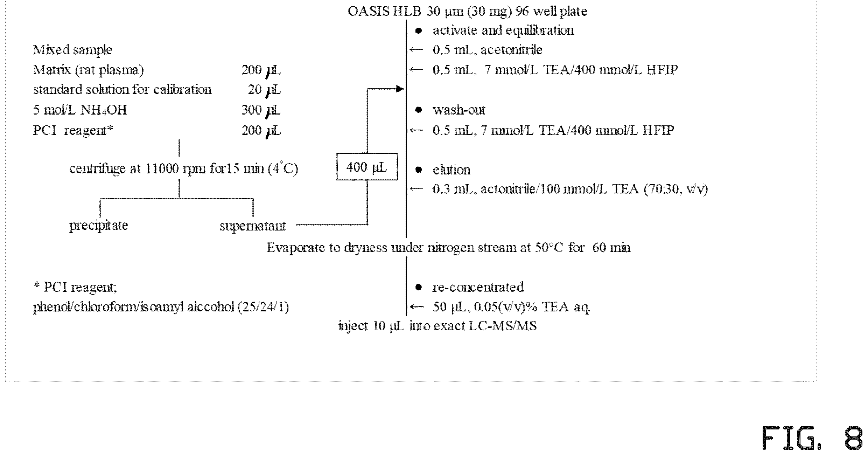

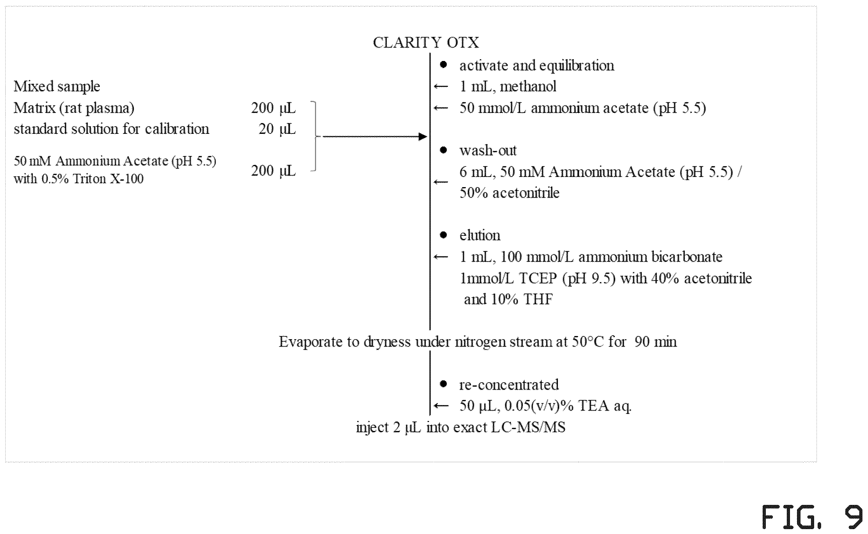

FIG. 7 shows a scheme of the pretreatment method in the examples. FIG. 8 shows a scheme of the pretreatment method using a PCI reagent. FIG. 9 shows a scheme of the pretreatment method using the kit (CLARUTY OTX). Each scheme shows the flow of each extraction method. For the "Mixed sample", a sample for a calibration curve was prepared by adding a standard solution for a calibration curve as much as 1/10 of the plasma volume to the rat plasma for solid-phase extraction. Then, the subsequent additives were applied depending on each extraction method. In the flow on the right side of the scheme, from washing and activating the plate used for the solid-phase extraction, additives based on each extraction method were mixed with the calibration curve sample, and then they were applied to each solid-phase plate. Then, the solid-phase plate was washed depending on each extraction method, and was finally desorbed from the solid phase plate with an elution solvent based on each method. Furthermore, the desorbed solvent was distilled off at 50°C while blowing nitrogen gas, and a solvent of 50 µL (also depending on each extraction method) was added to the residue and redissolved.

The scheme of FIG. 7 is summarized as follows.
1) A calibration curve sample was prepared by adding a 10 ng/mL S-modified oligonucleic acid standard solution to rat plasma of 200 µL and mixing them.
2) A 1 mol/L TEAA (pH 8.4) of 200 µL was added to the calibration curve sample, and they were mixed.
3) An OASIS HLB 30 µm (30 mg) 96 well plate (solid phase) was prepared, acetonitrile of 0.5 mL was added to the well, and flowing was performed.
4) A 1 mol/L TEAA (pH 8.4) of 0.5 mL was added, and flowing was performed.
5) Flowing was performed by applying all the calibration curve samples prepared in the process 2) to this well.
6) Milli-Q water (ultrapure water) of 2 mL was added to this well, and the well was washed by performing flowing.
7) Flowing was performed by adding a 50% acetonitrile aqueous solution of 0.3 mL to the well, and the S-modified oligonucleic acid was eluted from the solid phase.
8) The eluent in the well was dried at 50°C under a nitrogen gas stream.
9) A 0.05% TEA aqueous solution of 50 µL was added to the well, and the residue was completely dissolved.

### 4. Review on HPLC mobile phase

In the preclinical research presentation, it was speculated that the cause of column durability was evaporation of HFIPA. By suppressing evaporation of HFIPA, deterioration of the column (pressure increase) was suppressed, and the sensitivity was stabilized. To prevent evaporation, a bottle cap (bottle cap with a vent valve) that suppresses evaporation of an organic solvent into a laboratory was used. In addition, as this bottle cap, a cap with a vent valve was used.

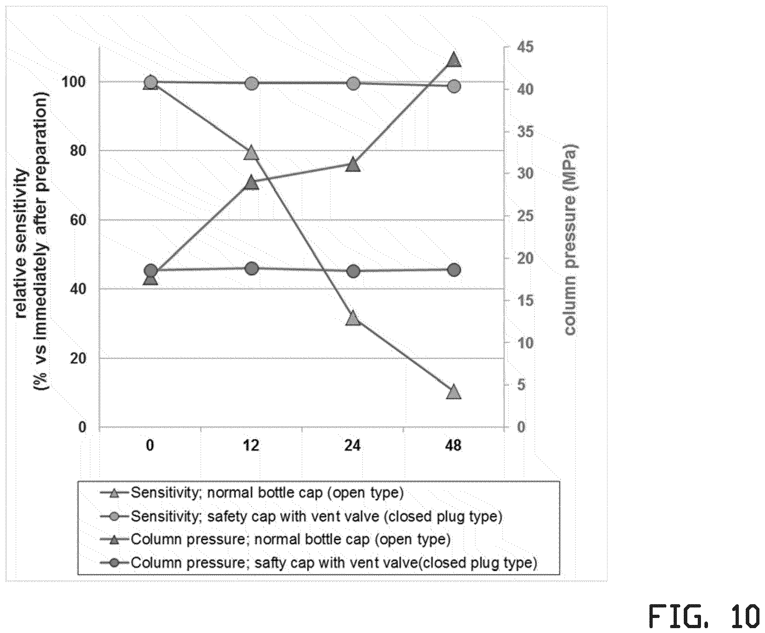

FIG. 10 is a graph corresponding to a drawing for comparing the pressure (back pressure) of the HPLC column and the sensitivity of the S-modified oligonucleic acid with and without the safety bottle cap. In the drawing, the "relative sensitivity (% vs immediately after preparation)" refers to a relative sensitivity (%) with respect to that obtained immediately after adjustment. The "column pressure (MPa)" refers to the column pressure (MPa) . The "Sensitivity, normal bottle cap (open type)" refers to a sensitivity when an open type normal bottle cap is used. The "Sensitivity, safety cap with vent valve (closed plug type)" refers to a sensitivity when a safety cap with a closed plug type vent valve is used. The "column pressure and normal bottle cap (open type) " refers to a pressure of the column when an open type normal bottle cap is used. The "column pressure, safety cap with vent valve (closed plug type)" refers to a pressure of the column when a safety cap with a closed plug type vent valve is used.

It is desirable that the back pressure and sensitivity are constant not only in the LC-MS/MS but also in a general HPLC analysis. The sample (standard solution) was injected every 12 hours immediately after the start. Meanwhile, the mobile phase continuously flows for 48 hours. Typically, injection of the pretreated sample causes a decrease in the sensitivity and an increase in the back pressure. This phenomenon occurs when the sample is poorly purified. However, when the HFIPA is added to the mobile phase in the nucleic acid measurement, the back pressure increases, and the sensitivity decreases even without injecting a sample. As shown in FIG. 10, it is recognized that the back pressure and sensitivity are stabilized by applying the safety bottle cap.

### Industrial Applicability

The present invention relates to a mass spectrometry method, and may be used in the field of analytical devices. Since the present invention can be used especially for mass spectrometry for nucleic acids or peptides, it can be used in the medical field or the analytical field.

### Reference Signs List

- 1: chromatography-mass spectrometry device
- 3: chromatography
- 5: ionization unit
- 7: first mass separation unit
- 9: collision cell
- 11: second mass separation unit
- 13: ion detection unit

## Claims

1. A mass spectrometry method for a target object using a chromatography-mass spectrometry device having a chromatograph, an ionization unit, a first mass separation unit, a collision cell, a second mass separation unit, and an ion detection unit in this order, the method comprising:
adding an ion pair agent and a Hunig's base to a mobile phase of the chromatograph; and
setting an absolute value of an applied voltage of the collision cell to 20 V or higher and 250 V or lower.

2. The method according to claim 1, wherein the ion pair agent is hexafluoro-2-propanol.

3. The method according to claim 1, wherein the chromatograph has a cap with a vent valve.

4. The method according to claim 1, wherein the target object is a protein, peptide, or nucleic acid.

5. The method according to claim 1, wherein the first mass separation unit and the second mass separation unit include a first quadrupole mass spectrometer and a second quadrupole mass spectrometer, respectively.

6. The method according to claim 1, wherein the absolute value of the applied voltage of the collision cell is 60 V or higher and 120 V or lower.

7. The method according to claim 1, wherein the applied voltage of the collision cell is set such that an ion intensity passing through the collision cell and having a mass-to-charge ratio (m/z) of 94.9 becomes a maximum value or 90% or higher of the maximum value.
